# EUROPÄISCHE PATENTSCHRIFT

(11) **EP 3 173 280 B1**
(45) Veröffentlichungstag und Bekanntmachung des Hinweises auf die Patenterteilung: **27.12.2023**
(21) Anmeldenummer: 16199133.6
(22) Anmeldetag: 16.11.2016
(51) Int. Cl.: H01M 10/42, H01M 50/249, H01M 50/509, H01M 50/51, B60L 3/12, B60L 50/60, B60L 58/18, B60L 58/20, B60L 58/21, B60L 58/22

(54) **BATTERIE, FAHRZEUG MIT EINER SOLCHEN BATTERIE UND VERWENDUNG EINER SOLCHEN BATTERIE**
BATTERY, VEHICLE WITH SUCH A BATTERY AND USE OF SUCH A BATTERY
BATTERIE, VÉHICULE COMPRENANT UNE TELLE BATTERIE ET UTILISATION D'UNE TELLE BATTERIE

(30) Priorität: 24.11.2015 DE 102015120285
(43) Veröffentlichungstag der Anmeldung: 31.05.2017
(73) Patentinhaber: Auto-Kabel Management GmbH, 79688 Hausen i.W. (DE)
(72) Erfinder: Tazarine, Wacim, 41812 Erkelenz (DE); Betscher, Simon, 41515 Grevenbroich (DE); Rafati, Sohejl, 41366 Schwalmtal (DE)
(74) Vertreter: Cohausz & Florack

(56) Entgegenhaltungen:
- EP-A1- 2 849 254
- WO-A1-2014/146596
- DE-A1- 10 361 743
- DE-A1-102009 057 919
- DE-A1-102011 075 091
- DE-A1-102012 015 921
- DE-A1-102014 201 345
- DE-A1-102015 104 003
- US-A1- 2006 006 841

## Beschreibung

Die Erfindung betrifft eine Batterie, insbesondere eine Fahrzeugbatterie, mit einem ersten Batteriepol und mit einem zweiten Batteriepol, wobei im geladenen Zustand der Batterie zwischen dem zweiten und dem ersten Batteriepol eine erste Nennspannung abgreifbar ist.

In Kraftfahrzeugen werden Batterien beispielsweise als Starterbatterien eingesetzt, um das Bordnetz des Fahrzeugs zu versorgen. Kraftfahrzeuge mit Verbrennungsmotoren weisen zum Beispiel typischerweise Starterbatterien mit einer Nennspannung von 12 oder 14 V auf.

Mit der fortschreitenden Entwicklung von Fahrzeugen mit Elektro- bzw. Elektrohybridantrieb und von neuen elektronischen Fahrzeugkomponenten, die eine höhere Versorgungsspannung benötigen, besteht ein Bedarf, die Nennspannung des Bordnetzes zu erhöhen, insbesondere auf eine Spannung bei 48 V.

Eine Umrüstung sämtlicher elektronischer Verbraucher auf diese höhere Spannung würde allerdings zu erheblichen Mehrkosten führen, so dass gleichzeitig das Bedürfnis besteht, die alten Fahrzeugkomponenten weiter verwenden zu können.

Aus diesem Grund wird vorgeschlagen, in einem Fahrzeug zwei verschiedene Nennspannungen zur Verfügung zu stellen, beispielsweise über zwei Bordnetze mit verschiedenen Nennspannungen, wobei in jedes dieser Bordnetze jeweils eine Batterie, ein Generator und Verbraucher mit entsprechender Nennspannung integriert sind. Dies hat jedoch den Nachteil, dass für die beiden Bordnetze jeweils zwei Generatoren und zwei Batterien erforderlich sind, wodurch das Gewicht und der erforderliche Bauraum für eine solche Lösung groß sind.

Zwar besteht die Möglichkeit, einen der Generatoren beispielsweise durch einen zentralen DC/DC-Wandler zu ersetzen. Der erforderliche Bauraum und das Gewicht dieser Lösung bleiben jedoch immer noch recht hoch.

Aus der DE 10 2012 015921 A1 ist ein Batteriesystem mit zwei Batteriesträngen und zwei Spannungsabgriffen für unterschiedliche Spannungen bekannt. Die Batterie wird in einer Energieversorgungseinheit eingesetzt, in der ein Generator und ein DC/DC-Wandler so gesteuert werden, dass der Stromfluss aus einem der beiden Spannungsabgriffe auf einen Null-Wert geregelt wird.

Vor diesem Hintergrund liegt der vorliegenden Erfindung die Aufgabe zugrunde, eine Batterie und ein Bordnetzsystem für ein Fahrzeug zur Verfügung zu stellen, welche ein geringeres Gewicht aufweisen und weniger Bauraum erfordern.

Diese Aufgabe wird durch eine Batterie gemäß Anspruch 1 gelöst.

Weiterhin wird die oben genannte Aufgabe gemäß Anspruch 7 erfindungsgemäß zumindest teilweise gelöst durch ein Bordnetzsystem für ein Fahrzeug mit einem ersten und einem zweiten Bordnetz betragsmäßig verschiedener Nennspannungen und der zuvor genannten Batterie, wobei die Batterie über den ersten und zweiten Batteriepol an das erste Bordnetz und über den ersten und dritten Batteriepol an das zweite Bordnetz anschließbar oder angeschlossen.

Es wurde erkannt, dass sich die Anzahl der für die Versorgung zweier Bordnetze erforderlichen Komponenten in einem Fahrzeug durch die zuvor beschriebene Batterie reduzieren lässt. Im Gegensatz zu herkömmlichen zweipoligen Batterien, die nur eine Nennspannung zur Verfügung stellen, weist die zuvor beschriebene Batterie zusätzlich einen dritten Batteriepol auf und kann dadurch zwei verschiedene Nennspannungen zur Verfügung stellen und/oder mit zwei verschiedenen Nennspannungen geladen werden. Auf diese Weise kann die Batterie gleichzeitig in zwei Bordnetze mit verschiedenen Nennspannungen integriert werden und damit zwei konventionelle zweipolige Batterien ersetzen. Beispielsweise können die erste Nennspannung bei 48 V und die dritte Nennspannung bei 12 V liegen, so dass mit der Batterie ein erstes Bordnetz mit 48V und ein zweites Bordnetz mit 12 V versorgt werden können.

Der erste Batteriepol der Batterie dient als gemeinsamer Batteriepol für beide Nennspannungen und wird in einem Bordnetzsystem mit einer solchen Batterie vorzugsweise auf Masse gelegt

Unter einem Bordnetz wird die Gesamtheit eines elektrischen Versörguhgsleitungssystems und der darin integrierten Komponenten wie Batterie, Generator und elektrische Verbraucher verstanden.

Unter einer Nennspannung wird die elektrische Spannung im Normalbetrieb verstanden. Die Nennspannung einer Batterie oder eines Verbrauchers ist demnach die Spannung, die im Normalbetrieb an der Batterie bzw. am Verbraucher anliegt.

Unter einer Batterie werden vorliegend auch Akkumulatoren verstanden.

Im Folgenden werden mehrere Ausführungsformen der Batterie und des Bordnetzsystems beschrieben, wobei die einzelnen Ausführungsformen sowohl auf die Batterie als auch auf das Bordnetzsystem anwendbar und zudem untereinander kombinierbar sind.

Bei einer ersten Ausführungsform weist der erste Batteriepol eine erste Polarität auf und der zweite und der dritte Batteriepol weisen die der ersten Polarität entgegengesetzte Polarität auf. Beispielsweise kann der erste Batteriepol ein Minuspol sein und der zweite und der dritte Batteriepol können jeweils ein Pluspol der Batterie sein.

Bei einer weiteren Ausführungsform weist die Batterie ein Batteriegehäuse auf, wobei der erste, der zweite und der dritte Batteriepol jeweils von außen elektrisch kontaktierbar an dem Batteriegehäuse angeordnet sind. Bei der Batterie handelt es sich also insbesondere um eine einteilige Komponente, die den ersten, zweiten und dritten Batteriepol umfasst. Vorzugsweise umfassen der erste, zweite und dritte Batteriepol jeweils ein Anschlusselement an der Außenseite des Batteriegehäuses, so dass die Batteriepole über das jeweilige Anschlusselement angeschlossen werden können, beispielsweise an zwei Bordnetze verschiedener Nennspannung. Erfindungsgemäß umfasst die Batterie eine Batteriezellenanordnung mit einer Mehrzahl an Batteriezellen, wobei die Batteriezellen derart verschaltet sind, dass im geladenen Zustand der Batterie zwischen dem zweiten und dem ersten Batteriepol die erste Nennspannung und zwischen dem dritten und dem ersten Batteriepol die zweite Nennspannung anliegt.

Die Batteriezellen sind so verschaltet, dass mindestens eine Batteriezelle, vorzugsweise mehrere Batteriezellen, sowohl zwischen den ersten und zweiten Batteriepol, als auch zwischen den ersten und dritten Batteriepol geschaltet sind. Auf diese Weise stellt die mindestens eine Batteriezelle sowohl einen Anteil der Nennspannung zwischen dem ersten und zweiten Batteriepol, als auch einen Anteil der Nennspannung zwischen dem ersten und dritten Batteriepol zur Verfügung. Damit kann die dreipolige Batterie insgesamt mit weniger Batteriezellen ausgebildet werden als zwei zweipolige Batterien entsprechender Nennspannung. Weiterhin erfolgt bei unterschiedlicher Belastung des zweiten oder dritten Batteriepols eine gleichmäßigere Belastung der Batteriezellen.

Unter einer Batteriezelle wird vorliegend insbesondere eine galvanische Zelle verstanden, die eine vom Aufbau der Zelle abhängige Zellennennspannung aufweist. Batterien bestehen typischerweise aus einer Mehrzahl solcher Batteriezellen, wobei mehrere Batteriezellen in Reihe geschaltet werden, um die gewünschte Nennspannung der Batterie zu erhalten. Beispiele für Batteriezellen sind Primärzellen wie Zink-Kohle-Zellen, Lithiumzellen und dergleichen oder Sekundärzellen wie Bleiakkumulatoren, Lithium-Ionen-Akkumulatoren, Nickel-Cadmium-Akkumulatoren und dergleichen.

Die Batterie umfasst einen DC/DC-Wandler und die Batteriezellenanordnung umfasst einen Ersatzzweipol mit mindestens einer Batteriezelle, wobei der zweite und/oder der dritte Batteriepol über den DC/DC-Wandler mit einem Pol des Ersatzzweipols verbunden sind und wobei der DC/DC-Wandler dazu eingerichtet ist, die vom Ersatzzweipol bereitgestellte Nennspannung derart zu wandeln, dass zwischen dem ersten und dem zweiten Batteriepol die erste Nennspannung und/oder zwischen dem ersten und dem dritten Batteriepol die zweite Nennspannung bereit gestellt wird. Auf diese Weise kann die Batterie sogar mit nur einem Ersatzzweipol mit einer oder mehreren Batteriezellen realisiert werden, wobei der DC/DC-Wandler dafür sorgt, dass dennoch zwei verschiedene Nennspannungen am zweiten und dritten Batteriepol bereitgestellt werden können.

Die Nennspannung des Ersatzzweipols entspricht vorzugsweise der ersten oder der zweiten Nennspannung. In diesem Fall reicht es aus, wenn der DC/DC-Wandler nur zwischen dem Ersatzzweipol und dem Batteriepol der jeweils anderen Nennspannung angeordnet ist. Entspricht die Nennspannung des Ersatzzweipols beispielsweise der Nennspannung zwischen dem ersten und zweiten Batteriepol, dann kann der DC/DC-Wandler entsprechend nur zwischen dem Ersatzzweipol und dem dritten Batteriepol angeordnet werden.

Grundsätzlich kann der DC/DC-Wandler aber auch sowohl zwischen dem Ersatzzweipol und dem zweiten Batteriepol als auch zwischen dem Ersatzzweipol und dem dritten Batteriepol angeordnet werden. Dies hat den Vorteil, dass keine direkte Verbindung zwischen dem Ersatzzweipol und über den zweiten bzw. dritten Batteriepol angeschlossenen Verbrauchern besteht. Auf diese Weise lassen sich Fehlerfälle leichter identifizieren und isolieren, und zwar vorzugsweise sowohl in einem an dem zweiten Batteriepol angeschlossenen Bordnetz, als auch in einem an dem dritten Batteriepol angeschlossenen Bordnetz.

Unter einem DC/DC-Wandler wird vorliegend eine elektrische bzw. elektronische Komponente verstanden, mit der mindestens eine Eingangsgleichspannung an mindestens einem Eingang des DC/DC-Wandlers in mindestens eine Ausgangsgleichspannung an mindestens einem Ausgang des DC/DC-Wandlers gewandelt werden kann, wobei sich insbesondere die Ausgangsgleichspannung betragsmäßig von der Eingangsgleichspannung unterscheiden kann. Der DC/DC-Wandler kann auch mehrere Eingänge und/oder Ausgänge aufweisen. Beispielsweise wird unter einem DC/DC-Wandler vorliegend auch ein System aus mehreren Wandlern verstanden, die jeweils eine Eingangsgleichspannung in eine Ausgangsgleichspannung wandeln können.

Erfindungsgemäß umfasst die Batteriezellenanordnung einen ersten und einen zweiten Ersatzzweipol mit jeweils mindestens einer Batteriezelle, wobei der erste und der zweite Ersatzzweipol zwischen dem ersten und dem zweiten Batteriepol elektrisch in Reihe geschaltet sind und wobei der dritte Batteriepol an einem Verbindungspunkt zwischen dem ersten und dem zweiten elektrisch in Reihe geschalteten Ersatzzweipol abgreift. Die Ersatzzweipole weisen jeweils mindestens eine Batteriezelle auf, sodass zwischen den zwei Polen jedes Ersatzzweipols eine von der Verschaltung der mindestens einen oder mehreren Batteriezellen in dem Ersatzzweipol abhängige Spannung anliegt.

Der erste und der zweite Ersatzzweipol sind zwischen dem ersten und zweiten Batteriepol elektrisch in Reihe geschaltet Auf diese Weise addieren sich die Nennspannungen der beiden Ersatzzweipole auf, sodass zwischen dem ersten und dem zweiten Batteriepol eine von der Summe der Nennspannungen der zwei Ersatzzweipole abhängige Nennspannung anliegt.

Der dritte Batteriepol greift an einem Verbindungspunkt zwischen dem ersten und dem zweiten elektrisch in Reihe geschalteten Ersatzzweipol ab. Auf diese Weise ist nur einer der beiden Ersatzzweipole zwischen dem dritten und ersten Batteriepol angeordnet. Die Nennspannung zwischen dem dritten und dem ersten Batteriepol ist daher geringer ist als die Nennspannung zwischen dem zweiten und ersten Batteriepol.

Bei einer weiteren Ausführungsform umfasst der erste und/oder der zweite Ersatzzweipol eine Mehrzahl von zumindest teilweise in Reihe geschalteten Batteriezellen. Durch die Reihenschaltung der Batteriezellen wird die Nennspannung der einzelnen Batteriezellen so aufaddiert, dass die gewünschte Nennspannung der Ersatzzweipole erreicht wird. Auf diese Weise lassen sich abhängig von der Anzahl der in Reihe geschalteten Batteriezellen im ersten und zweiten Ersatzzweipol die Nennspannungen am zweiten und dritten Batteriepol gegenüber dem ersten Batteriepol bedarfsgemäß einstellen.

Bei einer weiteren Ausführungsform umfasst der erste und/oder der zweite Ersatzzweipol eine Mehrzahl von zumindest teilweise parallel geschalteten Batteriezellen. Durch das Parallelschalten von Batteriezellen lässt sich die elektrische Kapazität der Batterie erhöhen.

Erfindungsgemäß ist der erste Ersatzzweipol elektrisch zwischen dem ersten und dem dritten Batteriepol geschaltet und die elektrische Kapazität des ersten Ersatzzweipols ist größer als die elektrische Kapazität des zweiten Ersatzzweipols.

Auf diese Weise ist die elektrische Kapazität des Ersatzzweipols, der sowohl zwischen den ersten und zweiten als auch zwischen den ersten und dritten Batteriepol geschaltet ist, größer als die Kapazität des Ersatzzweipols, der lediglich zwischen den ersten und zweiten Batteriepol geschaltet ist. Dadurch ist die Kapazität der Ersatzzweipole besser auf den Leistungsabgriff von den verschiedenen Batteriepolen eingerichtet.

Erfindungsgemäß sind der zweite und der dritte Batteriepol über einen DC/DC-Wandler elektrisch miteinander verbunden. Auf diese Weise kann ein Ausgleich zwischen der über den zweiten und über den dritten Batteriepol abgegriffenen Leistung erfolgen. Die Gesamtkapazität der Batterie lässt sich dadurch unabhängig vom Leistungsabgriff an den verschiedenen Batteriepolen besser ausnutzen.

Bei einer weiteren Ausführungsform sind der erste und/oder der zweite Ersatzzweipol über einen DC/DC-Wandler mit dem zweiten bzw. dritten Batteriepol verbunden. Dies hat den Vorteil, dass keine direkte Verbindung zwischen den Ersatzzweipolen einerseits und über den zweiten bzw. dritten Batteriepol angeschlossenen Verbrauchern andererseits besteht. Auf diese Weise lassen sich Fehlerfälle leichter identifizieren und isolieren, und zwar vorzugsweise sowohl in einem an dem zweiten Batteriepol angeschlossenen Bordnetz, als auch in einem an dem dritten Batteriepol angeschlossenen Bordnetz.

Weist die Batterie einen DC/DC-Wandler auf, so ist dieser vorzugsweise auch mit dem ersten Batteriepol verbunden. Auf diese Weise wird dem DC/DC-Wandler eine Bezugsspannung (z.B. Masse) zur Bereitstellung bzw. Regelung der ersten und/oder zweiten Nennspannung zur Verfügung gestellt. Durch die Verbindung mit dem ersten Batteriepol kann zudem die elektrische Versorgung der Elektronik des DC/DC-Wandlers sichergestellt werden.

Der DC/DC-Wandler kann auch dazu eingerichtet sein, das Lade- und Entladeverhalten der Batterie zu kontrollieren.

Bei einer weiteren Ausführungsform ist in die Batterie ein Batteriemanagementsystem integriert. Ein derartiges Batteriemanagementsystem ist insbesondere vorteilhaft bei der Verwendung von Lithium-Ionen-Zellen. Vorzugsweise ist das Batteriemanagementsystem dazu eingerichtet, das Lade- und Entladeverhalten der Batterie zu steuern.

Die oben genannte Aufgabe wird erfindungsgemäß weiterhin zumindest teilweise gelöst durch ein Fahrzeug, insbesondere ein Kraftfahrzeug, Schienenfahrzeug, Luftfahrzeug oder Schiff, aufweisend die oben beschriebene Batterie oder das oben beschriebene Bordnetzsystem oder eine Ausführungsform davon.

Weiterhin wird die oben genannte Aufgabe erfindungsgemäß zumindest teilweise gelöst durch die Verwendung der zuvor beschriebenen Batterie oder einer Ausführungsform davon zur Spannungsversorgung in einem Fahrzeug, insbesondere in einem Kraftfahrzeug, einem Schienenfahrzeug, einem Luftfahrzeug oder einem Schiff, vorzugsweise zur Versorgung zweier Bordnetze mit unterschiedlicher Nennspannung.

Weitere Vorteile und Merkmale der vorliegenden Erfindung ergeben sich aus der nachfolgenden Beschreibung verschiedener Ausführungsbeispiele, wobei auf die beigefügte Zeichnung Bezug genommen wird.

In der Zeichnung zeigen
- Figur 1: ein Bordnetzsystem aus dem Stand der Technik,
- Figur 2: eine Batterie aus dem Stand der Technik,
- Figur 3: ein Beispiel einer Batterie,
- Figuren 4a-c: Ersatzzweipole für verschiedene Ausführungsformen der erfindungsgemäßen Batterie,
- Figur 5: ein Beispiel einer nicht-erfindungsgemäßen Batterie
- Figur 6: ein Ausführungsbeispiel der erfindungsgemäßen Batterie,
- Figur 7: ein Ausführungsbeispiel eines erfindungsgemäßen Bordnetzsystems,
- Figur 8: ein weiteres Ausführungsbeispiel der erfindungsgemäßen Batterie,
- Figur 9: ein weiteres Beispiel einer nicht-erfindungsgemäßen Batterie
- Figur 10: ein weiteres Beispiel einer nicht-erfindungsgemäßen Batterie und
- Figur 11: ein weiteres Beispiel einer nicht-erfindungsgemäßen Batterie,

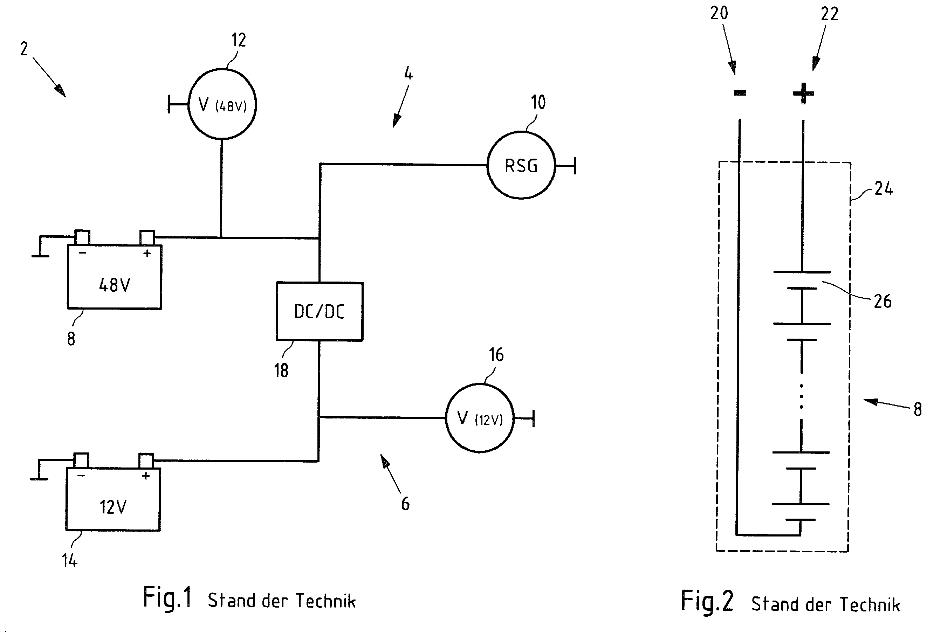

Figur 1 zeigt eine schematische Darstellung eines Bordnetzsystems aus dem Stand der Technik. Bei dem Bordnetzsystem 2 handelt es sich um ein Bordnetzsvstem für ein Elektrofahrzeug. Das Bordnetzsystem 2 umfasst zwei Bordnetze mit verschiedenen Nennspannungen. Das erste Bordnetz 4 hat eine Nennspannung von 48 V und das zweite Bordnetz 6 eine Nennspannung von 12 V.

In das erste Bordnetz 4 sind eine Batterie 8, ein Riemenstartergenerator 10 und Verbraucher 12 integriert, die jeweils eine Nennspannung von 48 V aufweisen. In das zweite Bordnetz 6 sind eine Batterie 14 und Verbraucher 16 integriert, die jeweils eine Nennspannung von 12 V aufweisen.

Figur 2 zeigt eine schematische Darstellung der Batterie 8 aus Fig. 1. Bei der Batterie 8 handelt es sich um eine konventionelle Fahrzeugbatterie mit einer Nennspannung von 48V.

Die Batterie 8 weist einen Minuspol 20 und einen Pluspol 22 auf, zwischen denen die Nennspannung von 48 V abgegriffen werden kann. Im Gehäuse 24 der Batterie 8 ist eine Mehrzahl von Batteriezellen 26 angeordnet, die zwischen dem Minuspol 20 und dem Pluspol 22 in Reihe geschaltet sind. Die einzelnen Batteriezellen weisen jeweils eine von der Art der Batteriezelle abhängige, feste Nennspannung auf, beispielsweise 3,7 V. Durch die Reihenschaltung der einzelnen Batteriezellen 26 addieren sich die Nennspannungen der einzelnen Batteriezellen 26 auf, so dass zwischen den Polen 20, 22 die gewünschte Nennspannung der Batterie 8 abgreifbar ist.

Das Bordnetzsystem 2 aus Figur 1 hat den Nachteil, dass für den Betrieb zweier Bordnetze 4, 6 mit unterschiedlichen Nennspannungen eine große Anzahl von Komponenten erforderlich ist, die zu einem hohen Fahrzeuggewicht führen. Zwar wurde in dem Bordnetzsystem 2 bereits anstelle eines Riemenstartergenerators für das zweite Bordnetz 6 ein leichterer und kleinerer DC/DC-Wandler vorgesehen, über den das zweite Bordnetz 6 vom Riemenstartergenerator 10 des ersten Bordnetzes 10 mitversorgt wird. Dennoch bleibt die Anzahl der erforderlichen Komponenten hoch.

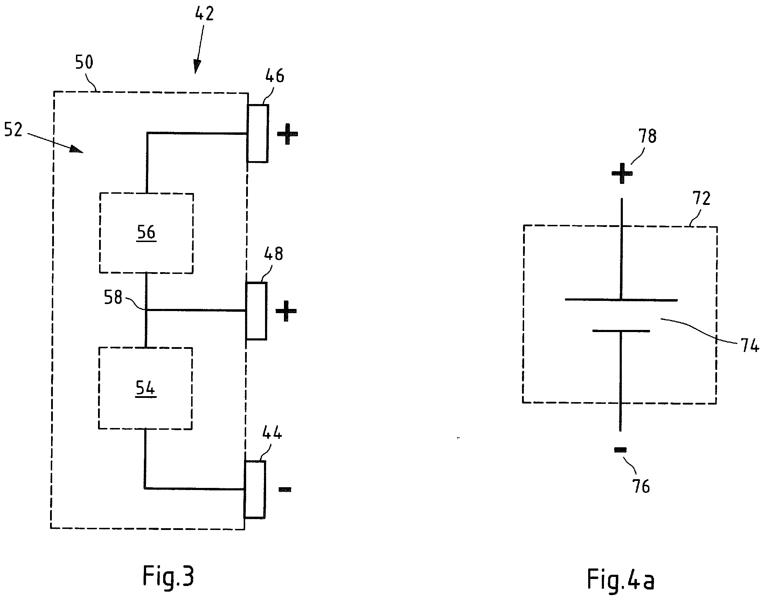

Figur 3 zeigt ein Beispiel einer Batterie in schematischer Darstellung. Die Batterie 42 weist einen ersten Batteriepol 44, einen zweiten Batteriepol 46 und einen dritten Batteriepol 48 auf. Der erste Batteriepol 44 ist in dem Beispiel der Minuspol der Batterie und die beiden anderen Batteriepole 46, 48 sind Pluspole der Batterie. Die drei Batteriepole 44, 46, 48 sind so an dem Gehäuse 50 der Batterie angeordnet, dass sie jeweils von außen kontaktiert werden können.

Innerhalb des Gehäuses 50 der Batterie 42 ist eine Bätteriezellenanordnung 52 vorgesehen. Die Batteriezellenanordnung 52 umfasst einen ersten Ersatzzweipol 54 und einen zweiten Ersatzzweipol 56, die zwischen dem ersten Batteriepol 44 und dem zweiten Batteriepol 46 in Reihe geschaltet sind. Der dritte Batteriepol 48 greift an einem Verbindungspunkt 58 zwischen dem ersten und dem zweiten Ersatzzweipol ab.

Die Ersatzzweipole 54, 56 sind so aufgebaut, dass zwischen ihren beiden Polen jeweils eine bestimmte Nennspannung abgreifbar ist. Da die Ersatzzweipole zwischen dem ersten Batteriepol 44 und dem zweiten Batteriepol 46 in Reihe geschaltet sind, liegt zwischen diesen beiden Batteriepolen eine Nennspannung an, die der Summe der Nennspannungen der beiden Ersatzzweipole 54, 56 entspricht. Da weiterhin der dritte Batteriepol 48 an dem Verbindungspunkt 58 abgreift, liegt von den zwei Ersatzzweipölen nur der erste Ersatzzweipol 54 zwischen dem ersten Batteriepol 44 und dem dritten Batteriepol 48, so dass zwischen diesen beiden Batteriepolen eine Nennspannung anliegt, die der Nennspannung des Ersatzzweipols 54 entspricht.

Die Figuren 4a-c zeigen verschiedene Ausführungsbeispiele für die Ersatzzweipole 54, 56.

Figur 4a zeigt die einfachste Ausgestaltung eines Ersatzzweipols 72 mit nur einer Batteriezelle 74. Zwischen den Polen des Ersatzzweipols 72 liegt demnach die Nennspannung der Batteriezelle 74 an.

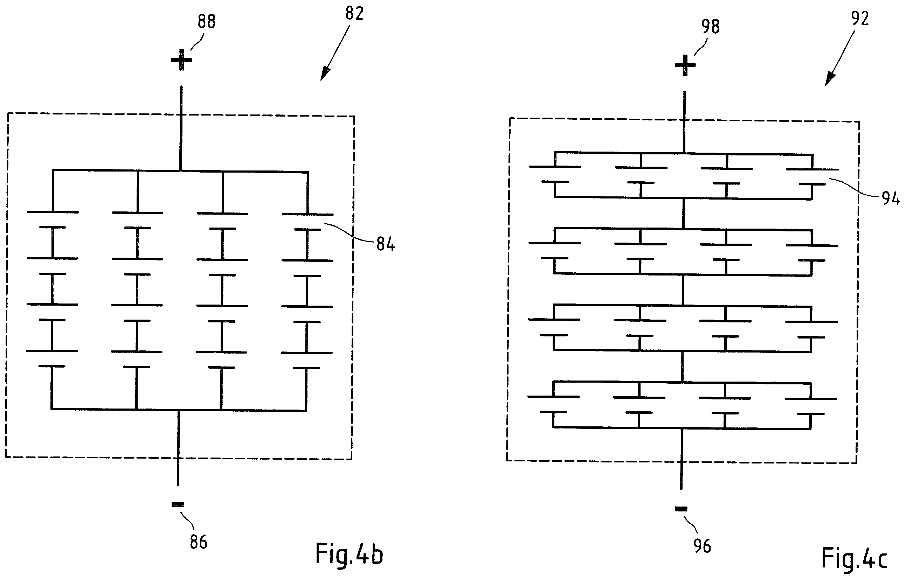

Figur 4b zeigt ein weiteres Ausführungsbeispiel eines Ersatzzweipols 82. Der Ersatzzweipol 92 umfasst insgesamt sechzehn Batteriezellen 84, von denen jeweils vier Batteriezellen in Reihe geschaltet sind. Dadurch beträgt die Nennspannung des Ersatzzweipols 82 dem Vierfachen der Spannung einer Batteriezelle 84. Die vier Reihenschaltungen der jeweils vier Batteriezellen 84 sind parallel geschaltet, um die elektrische Kapazität des Ersatzzweipols 82 zu erhöhen. Die Kapazität des Ersatzzweipols 82 beträgt auf diese Weise dem Vierfachen der Kapazität einer Batteriezelle 84.

Figur 4c zeigt ein weiteres Ausführungsbeispiel eines Ersatzzweipols 92. Der Ersatzzweipol 92 umfasst ebenfalls sechzehn Batteriezellen 94, von denen jeweils vier Batteriezellen parallel geschaltet sind. Die vier Parallelschaltungen der jeweils vier Batteriezellen 84 sind wiederum in Reihe geschaltet. Auf diese Weise weist der Ersatzzweipol 92 bei einem anderen Aufbau die gleiche Nennspannung und die gleiche Kapazität auf wie der Ersatzzweipol 82.

Natürlich sind auch weitere Ersatzzweipole mit einer anderen Zahl von Batteriezellen denkbar, wobei die Batteriezellen jeweils in Reihe und/oder parallel geschaltet sein können.

Die Ersatzzweipole 54, 56 aus Figur 3 können einen vergleichbaren Aufbau aufweisen wie die Ersatzzweipole 72, 82 und 92. Weiterhin können die Ersatzzweipole 54 und 56 gleichartig oder auch verschiedenartig aufgebaut sein.

Der Aufbau der Ersatzzweipole 54, 56 wird insbesondere so angepasst, dass zwischen erstem und zweiten bzw. zwischen erstem und drittem Batteriepol jeweils die gewünschte Nennspannung anliegt. Beispielsweise kann die erste Nennspannung 48 V und die zweite Nennspannung 12 V betragen.

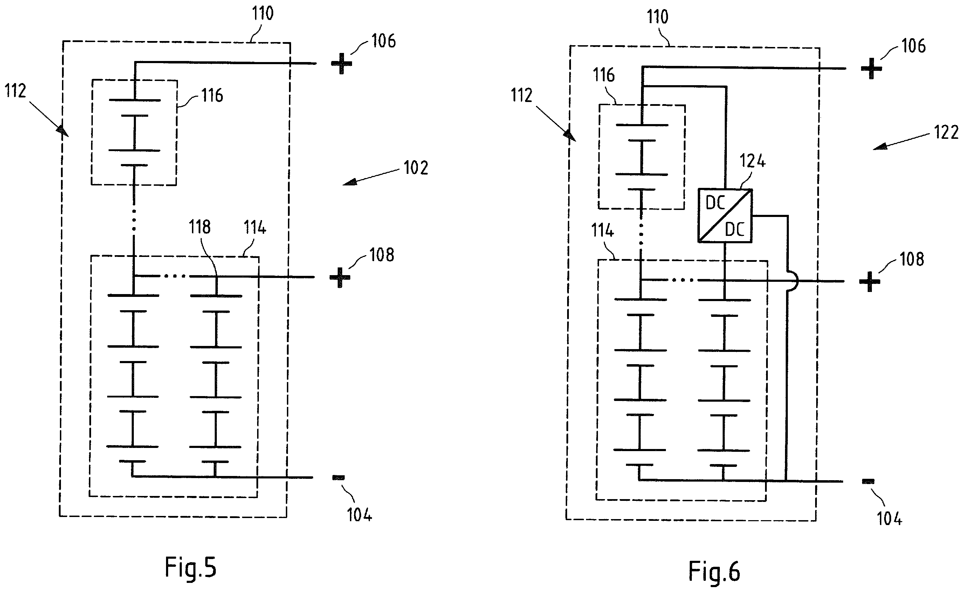

Figur 5 zeigt ein weiteres Beispiel einer Batterie. Die Batterie 102 weist einen ersten Batteriepol 104, einen zweiten Batteriepol 106 und einen dritten Batteriepol auf. Im Gehäuse 110 der Batterie 102 ist eine Batteriezellenanordnung 112 mit einem ersten Ersatzzweipol 114 und einem zweiten Ersatzzweipol 116 vorgesehen, die zwischen dem ersten Batteriepol 104 und dem zweiten Batteriepol 106 elektrisch in Reihe geschaltet sind. Der dritte Batteriepol 108 greift an einem Verbindungspunkt 118 zwischen dem ersten und zweiten Ersatzzweipol 114,116 ab.

Der erste Ersatzzweipol 114, der sowohl zwischen dem ersten und zweiten als auch zwischen dem ersten und dritten Batteriepol liegt, weist vorzugsweise eine größere Kapazität auf als der zweite Ersatzzweipol 116, da der erste Ersatzzweipol 114 durch den zweiten und dritten Batteriepol einer größeren Belastung unterliegt.

Figur 6 zeigt ein Ausführungsbeispiel der erfindungsgemäßen Batterie. Die Batterie 122 weist im Wesentlichen denselben Aufbau auf wie Batterie 102 aus Figur 5. Gleiche Komponenten sind entsprechend mit gleichen Bezugszeichen versehen. Zusätzlich zur Batterie 102 weist die Batterie 122 noch einen DC/DC-Wandler auf, über den der dritte Batteriepol 108 mit dem zweiten Batteriepol 106 verbunden ist.

Auf diese Weise kann die Gesamtkapazität der Batterie 122 unabhängig von der Leistungsabnahme vom zweiten und dritten Batteriepol besser ausgenutzt werden. Insbesondere lässt sich die Kapazität des zweiten Ersatzzweipols 116 über den DC/DC-Wandler 124 auch am dritten Batteriepol 108 nutzen.

Weiterhin hat der DC/DC-Wandler 124 den Vorteil, dass die gesamte Batterie, also insbesondere auch der zweite Ersatzzweipol 116, durch Anlegen einer Spannung zwischen dem ersten und dritten Batteriepol aufgeladen werden kann.

Der DC/DC-Wandler 124 kann wie in Fig. 6 dargestellt zusätzlich auch mit dem ersten Batteriepol 104 verbunden sein, so dass am DC/DC-Wandler eine Bezugsspannung bereitgestellt wird. Durch die Verbindung mit dem ersten Batteriepol 104 kann zudem die elektrische Versorgung der Elektronik des DC/DC-Wandlers 124 sichergestellt werden, da der DC/DC-Wandler auf diese Weise sowohl an einen Pluspol 106, als auch an einen Minuspol 104 angeschlossen ist. Der DC/DC-Wandler kann auch dazu eingerichtet sein, das Lade- und Entladeverhalten der Batterie 122 zu kontrollieren.

Die zuvor beschriebenen Batterien 42, 102, 122 ermöglichen damit den Abgriff von zwei verschiedenen Nennspannungen von einer Batterie. Eine solche Batterie kann daher zur Versorgung bzw. als Energiespeicher für zwei Bordnetze mit verschiedenen Nennspannungen verwendet werden.

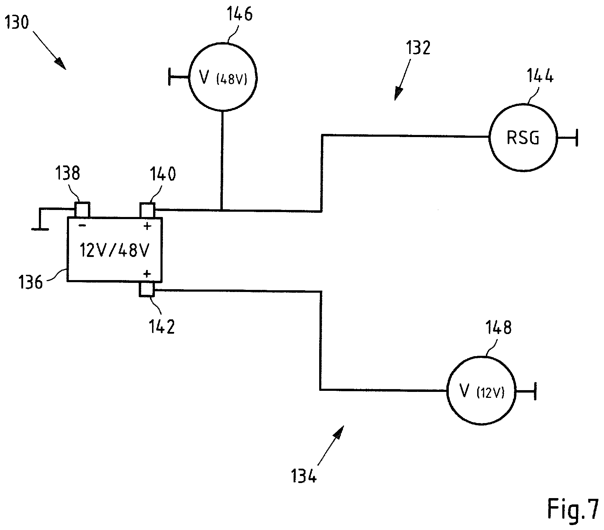

Figur 7 zeigt ein Ausführungsbeispiel des erfindungsgemäßen Bordnetzsystems. Das Bordnetzsystem 130 weist ein erstes Bordnetz 132 mit einer ersten Nennspannung von beispielsweise 48 Volt und ein zweites Bordnetz 134 mit einer abweichenden Nennspannung von beispielsweise 12 Volt auf.

Das Bordnetzsystem umfasst eine dreipolige Batterie 136, die beispielsweise wie eine der Batterien 42,102 oder 122 ausgebildet sein kann. Die Batterie 136 weist einen ersten Batteriepol 138 (Minuspol) auf, der in dem Beispiel auf Masse gelegt ist. Weiterhin weist die Batterie einen zweiten Batteriepol 140 mit einer Nennspannung von 48 V sowie einen dritten Batteriepol 142 mit einer Nennspannung von 12 V auf.

Die Batterie 136 ist mit dem ersten und zweiten Batteriepol in das erste Bordnetz 132 und mit dem ersten und dritten Batteriepol in das zweite Bordnetz 134 integriert. Auf diese Weise kann die Batterie 136 beide Bordnetze 132, 134 gleichzeitig versorgen, so dass gegenüber zwei konventionellen Batterien eine Batterie eingespart wird.

Die Batterie 136 kann über einen in das erste Bordnetz 132 integrierten Riemenstartergenerator 144 aufgeladen werden. Ist die Batterie 136 mit einem DC/DC-Wandler ausgestattet wie die Batterie 122 in Fig. 6, so kann auch eine Aufladung der Batterie über das zweite Bordnetz 134 erfolgen.

Über das erste Bordnetz 132 lassen sich die 48V-Verbraucher 146 eines Fahrzeugs versorgen und über das zweite Bordnetz 134 entsprechend die 12V-Verbraucher.

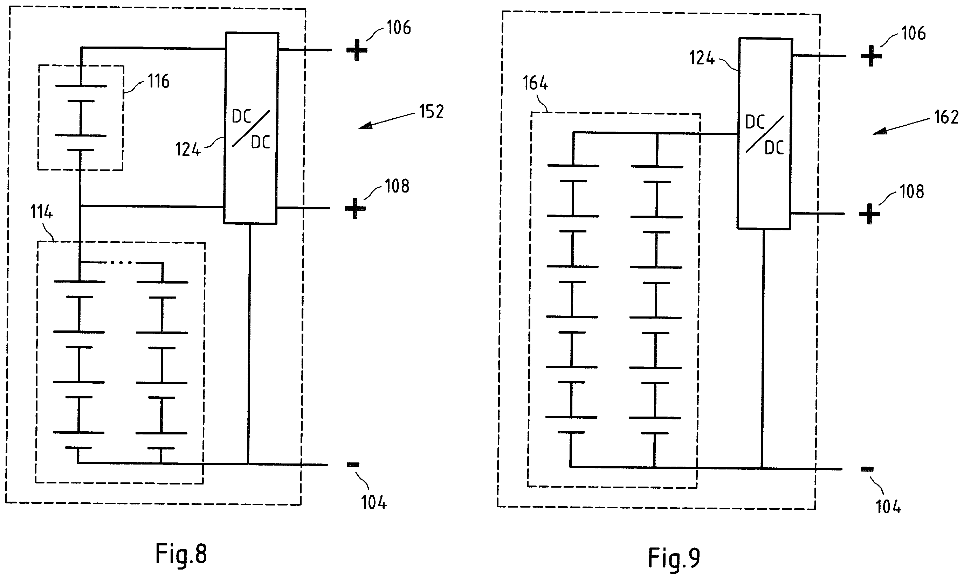

Figur 8 zeigt ein weiteres Ausführungsbeispiel der erfindungsgemäßen Batterie. Die Batterie 152 weist einen ähnlichen Aufbau auf wie Batterie 122 aus Figur 6. Gleiche Komponenten sind entsprechend mit gleichen Bezugszeichen versehen. Die Batterie 152 unterscheidet sich dadurch von Batterie 122, dass der erste Ersatzzweipol 114 über den DC/DC-Wandler 124 mit dem dritten Batteriepol 108 verbunden ist. Ebenso ist der zweite Ersatzzweipol 116 über den DC/DC-Wandler 124 mit dem zweiten Batteriepol 106 verbunden. Auf diese Weise besteht keine direkte Verbindung zwischen den Ersatzzweipolen 114 und 116 und den an den zweiten und/oder den dritten Batteriepol 106,108 angeschlossenen Verbrauchern. Auf diese Weise lassen sich Fehlerfälle leichter identifizieren und isolieren, und zwar vorzugsweise sowohl in einem über den zweiten Batteriepol 106 angeschlossenen ersten Bordnetz (z.B. 48V-Bordnetz), als auch in einem über den dritten Batteriepol 108 angeschlossenen zweiten Bordnetz (z.B. 12V-Bordnetz).

Figur 9 zeigt ein weiteres Beispiel einer Batterie. Die Batterie 162 unterscheidet sich dadurch von der Batterie 152 aus Figur 8, dass nur ein Ersatzzweipol 164 mit Batteriezellen vorgesehen ist. Der Ersatzzweipol 164 ist über den DC/DC-Wandler 124 mit dem zweiten und dritten Batteriepol 106,108 verbunden, wobei der DC/DC-Wandler 124 dazu eingerichtet ist, die vom Ersatzzweipol 164 bereitgestellte Nennspannung in die erste und/oder zweite Nennspannung für den zweiten bzw. dritten Batteriepol 106,108 umzuwandeln. Vorzugsweise stellt der Ersatzzweipol 164 im geladenen Zustand die erste oder die zweite Nennspannung zur Verfügung, so dass der DC/DC-Wandler 124 nur eine der an den Batteriepolen 106,108 anliegenden Spannungen betragsmäßig wandeln muss.

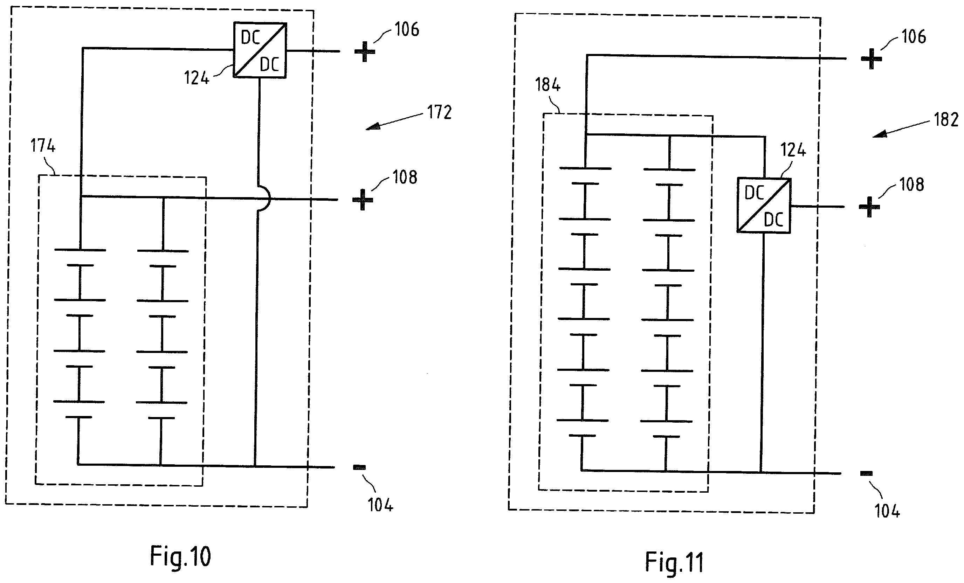

Figur 10 zeigt ein weiteres Beispiel einer Batterie. Die Batterie 172 unterscheidet sich dadurch von der Batterie 162 aus Figur 9, dass der Ersatzzweipol 174 der Batterie 172 direkt an den dritten Batteriepol 108 angeschlossen ist, während der zweite Batteriepol 106 über den DC/DC-Wandler 124 mit dem Ersatzzweipol 174 verbunden ist. Die Nennspannung des Ersatzzweipols 174 entspricht der zweiten Nennspannung.

Figur 11 zeigt ein weiteres Beispiel einer Batterie. Die Batterie 182 unterscheidet sich dadurch von der Batterie 172 aus Figur 10, dass der Ersatzzweipol 184 der Batterie 182 direkt an den zweiten Batteriepol 106 angeschlossen ist, während der dritte Batteriepol 108 über den DC/DC-Wandler 124 mit dem Ersatzzweipol 184 verbunden ist. Die Nennspannung des Ersatzzweipols 184 entspricht der dritten Nennspannung.

Zusammengefasst kann mit der zuvor beschriebenen Batterie bzw. mit dem beschriebenen Bordnetzsystem die Komponentenzahl zur Bereitstellung zweier Bordnetze mit verschiedenen Netzspannungen in einem Fahrzeug reduziert werden. Dadurch reduzieren sich der erforderliche Bauraum und das Gewicht des Bordnetzsystems.

## Patentansprüche

1. Batterie (42, 102, 122, 136, 152, 162, 172, 182), insbesondere Fahrzeugbatterie,
- mit einem ersten Batteriepol (44, 104,138) und mit einem zweiten Batteriepol (46,106,140), wobei im geladenen Zustand der Batterie (42, 102, 122, 136,152, 162, 172, 182) zwischen dem zweiten (46, 106, 140) und dem ersten Batteriepol (44, 104, 138) eine erste Nennspannung abgreifbar ist,
- wobei die Batterie (42, 102, 122, 136, 152, 162, 172, 182) einen dritten Batteriepol (48, 108, 142) aufweist, wobei im geladenen Zustand der Batterie (42, 102, 122, 136, 152, 162, 172, 182) zwischen dem dritten (48,108,142) und dem ersten Batteriepol (44,104,138) eine zweite Nennspannung abgreifbar ist, die sich betragsmäßig von der ersten Nennspannung unterscheidet,
- wobei die Batterie (42, 102, 122, 136, 152, 162, 172, 182) eine Batteriezellenanordnung (52, 112) mit einer Mehrzahl an Batteriezellen (74,84, 94) umfasst, wobei die Batteriezellen (74, 84, 94) derart verschaltet sind, dass im geladenen Zustand der Batterie (42,102, 122, 136, 152, 162, 172, 182) zwischen dem zweiten (46, 106, 140) und dem ersten Batteriepol (44, 104, 138) die erste Nennspannung und zwischen dem dritten (48,108,142) und dem ersten Batteriepol (44, 104,138) die zweite Nennspannung anliegt,
- wobei die Batteriezellenanordnung (52,112) einen ersten (54, 72,82,92,114) und einen zweiten Ersatzzweipol (56, 72,82,92, 116) mit jeweils mindestens einer Batteriezelle (74, 84, 94) umfasst, wobei der erste (54, 72,82,92,114) und der zweite Ersatzzweipol (56, 72, 82, 92, 116) zwischen dem ersten (44,104, 138) und dem zweiten Batteriepol (46, 106, 140) elektrisch in Reihe geschaltet sind und wobei der dritte Batteriepol (48, 108, 142) an einem Verbindungspunkt (58,118) zwischen dem ersten (54, 72, 82, 92, 114) und dem zweiten elektrisch in Reihe geschalteten Ersatzzweipol (56, 72, 82, 92,116) abgreift, und
- wobei der erste Ersatzzweipol (54, 72, 82, 92, 114) elektrisch zwischen dem ersten (44,104,138) und dritten Batteriepol (48, 108, 142) geschaltet ist, **dadurch gekennzeichnet,**
- **dass** die elektrische Kapazität des ersten Ersatzzweipols (54, 72, 82, 92,114) größer ist als die elektrische Kapazität des zweiten Ersatzzweipols (56, 72, 82, 92, 116) und
- **dass** der zweite (46, 106, 140) und der dritte Batteriepol (48, 108, 142) über einen DC/DC-Wandler (124) elektrisch miteinander verbunden sind.

2. Batterie nach Anspruch 1,
**dadurch gekennzeichnet,**
**dass** der erste Batteriepol (44, 104, 138) eine erste Polarität aufweist und der zweite (46,106,140) und der dritte Batteriepol (48, 108, 142) die der ersten Polarität entgegengesetzte Polarität aufweisen.

3. Batterie nach Anspruch 1 oder 2,
**dadurch gekennzeichnet,**
**dass** die Batterie (42, 102, 122, 136, 152, 162, 172, 182) ein Batteriegehäuse aufweist, wobei der erste (44, 104, 138), der zweite (46,106,140) und der dritte Batteriepol (48,108,142) jeweils von außen elektrisch kontaktierbar an dem Batteriegehäuse (50,110) angeordnet sind.

4. Batterie nach einem der Ansprüche 1 bis 3,
**dadurch gekennzeichnet,**
**dass** der erste (54, 72, 82, 92, 114) und/oder der zweite Ersatzzweipol (56, 72, 82,92,116) eine Mehrzahl von zumindest teilweise in Reihe geschalteten Batteriezellen (74, 84, 94) umfasst.

5. Batterie nach einem der Ansprüche 1 bis 4,
**dadurch gekennzeichnet,**
**dass** der.erste (54,72,82,92,114) und/oder der zweite Ersatzzweipol (56, 72, 82, 92, 116) eine Mehrzahl von zumindest teilweise parallel geschalteten Batteriezellen (74, 84, 94) umfasst.

6. Batterie nach einem der Ansprüche 1 bis 5,
**dadurch gekennzeichnet,**
**dass** in die Batterie (42, 102, 122, 136,152, 162, 172, 182) ein Batteriemanagementsystem integriert ist.

7. Bordnetzsystem (130) für ein Fahrzeug mit einem ersten (132) und einem zweiten Bordnetz (134) betragsmäßig verschiedener Nennspannung und einer Batterie (42, 102, 122, 136, 152, 162, 172, 182) nach einem der Ansprüche 1 bis 6, wobei die Batterie (42, 102, 122, 136, 152,162,172,182) über den ersten (44, 104, 138) und zweiten Batteriepol (46, 106, 140) an das erste Bordnetz (132) und über den ersten (44, 104, 138) und dritten Batteriepol (48, 108, 142) an das zweite Bordnetz (134) anschließbar oder angeschlossen ist.

8. Fahrzeug, insbesondere Kraftfahrzeug, Schienenfahrzeug, Luftfahrzeug oder Schiff, aufweisend eine Batterie (42, 102, 122, 136, 152, 162, 172, 182) nach einem der Ansprüche 1 bis 6 und/oder ein Bordnetzsystem (130) nach Anspruch 7.

9. Verwendung einer Batterie (42, 102, 122, 136, 152, 162, 172, 182) nach einem der Ansprüche 1 bis 6 zur Spannungsversorgung in einem Fahrzeug, insbesondere in einem Kraftfahrzeug, einem Schienenfahrzeug, einem Luftfahrzeug oder einem Schiff, vorzugsweise zur Versorgung zweier Bordnetze (132,134) mit unterschiedlicher Nennspannung.

## Claims

1. Battery (42, 102, 122, 136, 152, 162, 172, 182), in particular vehicle battery,
- with a first battery terminal (44, 104, 138) and with a second battery terminal (46, 106, 140), wherein, in the charged state of the battery (42, 102, 122, 136, 152, 162, 172, 182), a first nominal voltage can be tapped between the second (46, 106, 140) and the first battery terminal (44, 104, 138),
- wherein the battery (42, 102, 122, 136, 152, 162, 172, 182) has a third battery terminal (48, 108, 142), wherein, in the charged state of the battery (42, 102, 122, 136, 152, 162, 172, 182), a second nominal voltage can be tapped between the third (48, 108, 142) and the first battery pole (44, 104, 138), which second nominal voltage differs in amount from the first nominal voltage,
- wherein the battery (42, 102, 122, 136, 152, 162, 172, 182) comprises a battery cell assembly (52, 112) having a plurality of battery cells (74, 84, 94), the battery cells (74, 84, 94) being electrically interconnected such that, in the charged state of the battery (42, 102, 122, 136, 152, 162, 172, 182), the first nominal voltage is applied between the second (46, 106, 140) and the first battery pole (44, 104, 138) and the second nominal voltage is applied between the third (48, 108, 142) and the first battery pole (44, 104, 138),
- wherein the battery cell assembly (52, 112) comprises a first equivalent two terminal network (54, 72, 82, 92, 114) and a second equivalent two terminal network (56, 72, 82, 92, 116) , each comprising at least one battery cell (74, 84, 94), wherein the first equivalent two terminal network (54, 72, 82, 92, 114) and the second equivalent two terminal network (56, 72, 82, 92, 116) are electrically connected in series between the first (44, 104, 138) and the second battery terminal (46, 106, 140), and wherein the third battery terminal (48, 108, 142) is electrically connected to a connection point (58, 118) between the first equivalent two terminal network (54, 72, 82, 92, 114) and the second equivalent two terminal network (56, 72, 82, 92, 116) being electrically connected in series, and
- wherein the first equivalent two terminal network (54, 72, 82, 92, 114) is electrically connected between the first (44, 104, 138) and third battery terminals (48, 108, 142),
**characterized**
- **in that** the electrical capacity of the first equivalent two terminal network (54, 72, 82, 92, 114) is greater than the electrical capacity of the second equivalent two terminal network (56, 72, 82, 92, 116), and
- **in that** the second (46, 106, 140) and third battery terminals (48, 108, 142) are electrically connected to each other via a DC/DC converter (124).

2. Battery according to claim 1,
**characterized in that** the first battery terminal (44, 104, 138) has a first polarity and the second (46, 106, 140) and third battery terminals (48, 108, 142) have the opposite polarity to the first polarity.

3. Battery according to claim 1 or 2,
**characterized in that** the battery (42, 102, 122, 136, 152, 162, 172, 182) comprises a battery housing, wherein the first (44, 104, 138), the second (46, 106, 140) and the third battery pole (48, 108, 142) are each arranged on the battery housing (50, 110) to be electrically contactable from the outside.

4. Battery according to any one of claims 1 to 3,
**characterized in that** the first (54, 72, 82, 92, 114) and/or the second equivalent two terminal network (56, 72, 82, 92, 116) comprises a plurality of battery cells (74, 84, 94) which are at least partially electrically connected in series.

5. Battery according to any one of claims 1 to 4,
**characterized in that** the first equivalent two terminal network (54, 72, 82, 92, 114) and/or the second equivalent two terminal network (56, 72, 82, 92, 116) comprises a plurality of battery cells (74, 84, 94) which are at least partially electrically connected in parallel.

6. Battery according to any one of claims 1 to 5,
**characterized in, that** a battery management system is integrated into the battery (42, 102, 122, 136, 152, 162, 172, 182).

7. On-board power supply network system (130) for a vehicle with a first on-board power supply network (132) and a second on-board power supply network (134) with different nominal voltages and with a battery (42, 102, 122, 136, 152, 162, 172, 182) according to one of claims 1 to 6, the battery (42, 102, 122, 136, 152, 162, 172, 182) being electrically connectable or electrically connected to the first on-board power supply network (132) via the first (44, 104, 138) and second battery terminals (46, 106, 140) and to the second on-board power supply network (134) via the first (44, 104, 138) and third battery terminals (48, 108, 142).

8. Vehicle, in particular automobile, rail vehicle, aircraft or ship, comprising a battery (42, 102, 122, 136, 152, 162, 172, 182) according to any one of claims 1 to 6 and/or an on-board power supply network system (130) according to claim 7.

9. Use of a battery (42, 102, 122, 136, 152, 162, 172, 182) according to one of claims 1 to 6 for supplying voltage in a vehicle, in particular in an automobile, a rail vehicle, an aircraft or a ship, preferably for supplying two on-board power supply networks (132, 134) with different nominal voltages.

## Revendications

1. Batterie (42, 102, 122, 136, 152, 162, 172, 182), en particulier batterie de véhicule,
- avec un premier pôle de batterie (44, 104, 138) et avec un deuxième pôle de batterie (46, 106, 140), une première tension nominale pouvant être prélevée à l'état chargé de la batterie (42, 102, 122, 136, 152, 162, 172, 182) entre le deuxième (46, 106, 140) et le premier pôle de batterie (44, 104, 138),
- la batterie (42, 102, 122, 136, 152, 162, 172, 182) présentant un troisième pôle de batterie (48, 108, 142), une deuxième tension nominale pouvant être prélevée à l'état chargé de la batterie (42, 102, 122, 136, 152, 162, 172, 182) entre le troisième pôle de batterie (48, 108, 142) et le premier pôle de batterie (44, 104, 138), laquelle se différencie en valeur absolue de la première tension nominale,
- dans lequel la batterie (42, 102, 122, 136, 152, 162, 172, 182) comprend un agencement de cellules de batterie (52, 112) avec une pluralité de cellules de batterie (74, 84, 94), les cellules de batterie (74, 84, 94) étant connectées de telle sorte qu'à l'état chargé de la batterie (42, 102, 122, 136, 152, 162, 172, 182), la première tension nominale est appliquée entre le deuxième (46, 106, 140) et le premier pôle (44, 104, 138) de la batterie et la deuxième tension nominale est appliquée entre le troisième (48, 108, 142) et le premier pôle (44, 104, 138) de la batterie,
- dans lequel l'agencement de cellules de batterie (52, 112) comprend un premier (54, 72, 82, 92, 114) et un deuxième bipôle équivalent (56, 72, 82, 92, 116) ayant chacun au moins une cellule de batterie (74, 84, 94), le premier (54, 72, 82, 92, 114) et le deuxième bipôle équivalent (56, 72, 82, 92, 116) étant connectés électriquement en série entre le premier (44, 104, 138) et le deuxième pôle de batterie (46, 106, 140), et dans lequel le troisième pôle de batterie (48, 108, 142) est prélevé à un point de connexion (58, 118) entre le premier (54, 72, 82, 92, 114) et le deuxième bipôle équivalent (56, 72, 82, 92, 116) connectés électriquement en série, et
- dans lequel le premier bipôle équivalent (54, 72, 82, 92, 114) est connecté électriquement entre le premier (44, 104, 138) et le troisième (48, 108, 142) pôle de la batterie,
**caractérisé**
- **en ce que** la capacité électrique du premier bipôle équivalent (54, 72, 82, 92, 114) est supérieure à la capacité électrique du deuxième bipôle équivalent (56, 72, 82, 92, 116) et
- **en ce que** le deuxième (46, 106, 140) et le troisième (48, 108, 142) pôles de la batterie sont reliés électriquement entre eux par l'intermédiaire d'un convertisseur DC/DC (124).

2. Batterie selon la revendication 1,
**caractérisée en ce que** le premier pôle de batterie (44, 104, 138) a une première polarité et le deuxième (46, 106, 140) et le troisième pôle de batterie (48, 108, 142) ont la polarité opposée à la première polarité.

3. Batterie selon la revendication 1 ou 2,
**caractérisée en ce que** la batterie (42, 102, 122, 136, 152, 162, 172, 182) présente un boîtier de batterie, le premier (44, 104, 138), le deuxième (46, 106, 140) et le troisième pôle de batterie (48, 108, 142) étant disposés chacun sur le boîtier de batterie (50, 110) de manière à pouvoir être mis en contact électrique de l'extérieur.

4. Batterie selon l'une des revendications 1 à 3,
**caractérisée en ce que** le premier (54, 72, 82, 92, 114) et/ou le deuxième bipôle équivalent (56, 72, 82, 92, 116) comprend une pluralité d'éléments de batterie (74, 84, 94) au moins partiellement connectés en série.

5. Batterie selon l'une des revendications 1 à 4,
**caractérisée en ce que** le premier (54, 72, 82, 92, 114) et/ou le deuxième bipôle équivalent (56, 72, 82, 92, 116) comprend une pluralité d'éléments de batterie (74, 84, 94) au moins partiellement connectés en parallèle.

6. Batterie selon l'une des revendications 1 à 5,
**caractérisée en ce qu'**un système de gestion de batterie est intégré dans la batterie (42, 102, 122, 136, 152, 162, 172, 182).

7. Système de réseau de bord (130) pour un véhicule avec un premier (132) et un deuxième réseau de bord (134) de tension nominale différente en valeur absolue et une batterie (42, 102, 122, 136, 152, 162, 172, 182) selon l'une des revendications 1 à 6, dans lequel la batterie (42, 102, 122, 136, 152, 162, 172, 182) peut être raccordée ou est raccordée au premier réseau de bord (132) via le premier (44, 104, 138) et le deuxième pôle de batterie (46, 106, 140) et au deuxième réseau de bord (134) via le premier (44, 104, 138) et le troisième pôle de batterie (48, 108, 142).

8. Véhicule, notamment automobile, ferroviaire, aérien ou naval, comportant une batterie (42, 102, 122, 136, 152, 162, 172, 182) selon l'une quelconque des revendications 1 à 6 et/ou un système de réseau de bord (130) selon la revendication 7.

9. Utilisation d'une batterie (42, 102, 122, 136, 152, 162, 172, 182) selon l'une des revendications 1 à 6 pour l'alimentation en tension dans un véhicule, en particulier dans un véhicule automobile, un véhicule ferroviaire, un véhicule aérien ou un véhicule naval, de préférence pour l'alimentation de deux réseaux de bord (132, 134) avec une tension nominale différente.
